# EUROPEAN PATENT APPLICATION

(11) **EP 1 801 076 A1**
(43) Date of publication of application: **27.06.2007**
(21) Application number: 05077952.9
(22) Date of filing: 21.12.2005
(51) Int. Cl.: C02F 3/06, C02F 3/12

(54) **Membrane reactor and processes carried out therein**

(71) Applicant: Nederlandse Organisatie voor Toegepast-Natuurwetenschappelijk Onderzoek TNO, 2628 VK Delft (NL)
(72) Inventor: Meesters, Koen Peter Henri, 3817 DK Amersfoort (NL); Goetheer, Earl Lawrence Vincent, 4554 CP Westdorpe (NL); van Liere, Hubrecht Cornelis, 6709 PN Wageningen (NL)
(74) Representative: Winckels, Johannes Hubertus F.

(57) **Abstract**

The invention is directed to a novel membrane reactor, as well as to processes carried out in such a reactor.

The invention provides a membrane bioreactor (MBR) comprising a vessel and contained therein at least one plate-like membrane unit that has at least one surface that is positioned non-vertically and means for introducing gas at a location near the bottom of said membrane unit. Furthermore, the invention provides a process for carrying out a chemical reaction involving micro-organisms, which is carried out in the MBR according to the present invention.

## Description

The invention is directed to a novel membrane reactor, as well as to processes carried out in such a reactor.

In the art it is known to use membrane bioreactors (MBR) for carrying out biochemical processes, in particular wastewater treatment processes. Typically, a MBR uses membrane modules, which are in the shape of a plate. Sometimes MBRs comprise modules of hollow fibres.

The present invention is particularly directed to MBRs employing plate-like membranes or membrane modules, *viz.* flat, usually rectangular, modules.

Although MBRs are employed successfully in aerobic wastewater treatment processes, in particular for treating industrial wastewater, the known MBRs in practice suffer from a number of drawbacks.

First of all, the present inventors have noted that mass transfer of oxygen from the gas phase to the micro-organisms is in practice often a rate limiting step. In order to improve the oxygen mass transfer, it is common to force oxygen in the reactor's contents, in particular by pumping air in it. However, the energy requirements of such pumping action is high and also the efficiency tends to be low, as the majority of the oxygen that is pumped into the fermentation broth never dissolves therein and is released directly to the atmosphere via the top of the reactor. In order to improve the oxygen content in the liquid phase of the reactor's contents, it has been suggested to use pure oxygen or to work under increased pressure. Generally speaking, however, these alternatives are too expensive and therefore not feasible in wastewater treatment practice.

Another drawback of processes that employ plate-like membrane modules is that they may suffer from fouling of their surface, as a result of which the volumetric flow rate of water through the membrane is seriously hampered and may decrease by as much as up to ten times or more, compared to the original clean water flux.

The present invention seeks to at least partly overcome the above-mentioned drawbacks.

It was found that when at least part of the plate-like membrane modules are placed in a non-vertical arrangement ("vertical" referring typically to the direction that is perpendicular to the surface on which the modules-or their containers-are placed, or referring typically to the direction an air bubble would take in a water column), and when the gas to be introduced in the liquid reactor contents, such as oxygen, is provided from the bottom of the thus arranged modules, a very efficient mass transfer of gas to liquid is obtained and thus the above-mentioned objective can be met. Thus, in a first aspect, the present invention is directed to a MBR or other type of reactor comprising a vessel and contained therein at least one plate-like membrane unit that has at least one surface that is positioned non-vertical and further comprising means for introducing gas at a location near the bottom of said membrane unit.

Fig. 1 schematically shows a MBR using hollow fibre membrane modules.

Fig. 2 schematically shows an example of a plate-like membrane unit that can be used in accordance with the present invention.

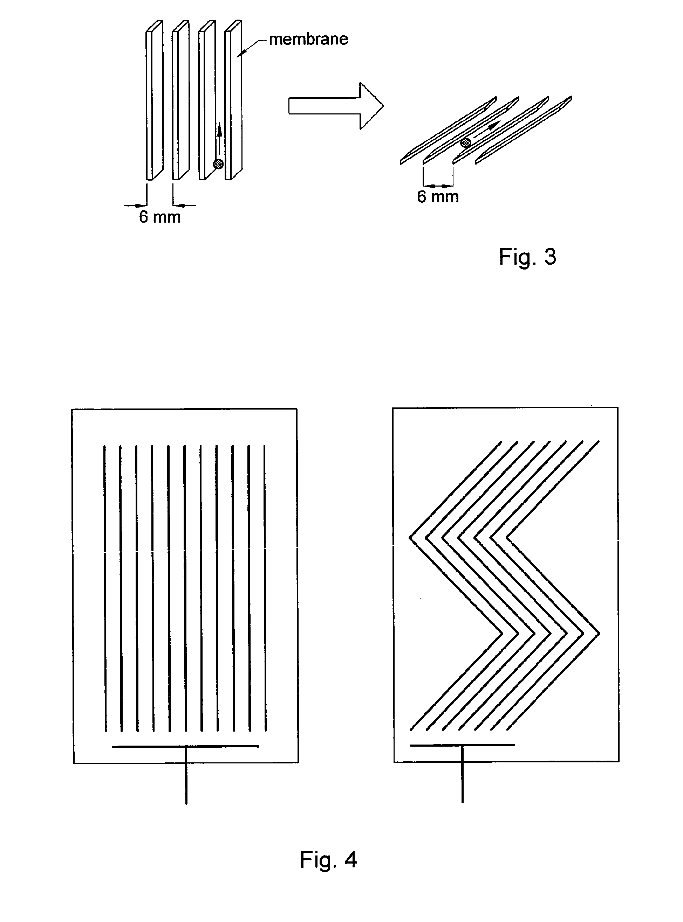

Fig. 3 schematically shows a typical prior art configuration (left hand side) and a configuration in accordance with the present invention.

Fig. 4 schematically shows a typical prior art configuration (left hand side) and a configuration in accordance with the present invention.

In accordance with the present invention the gas that is introduced in the bottom of the reactor is allowed to rise for a certain distance, but at a certain vertical position the gas bubbles meet the surface of the membrane and contact it and follow the membrane upwards along the membrane's surface.

Moreover, the residence time of the gas bubbles is increased considerably, which results in much better mass transfer from the gas (bubble) phase to the liquid phase.

Without wishing to be bound by theory, the present inventors believe that the residence time of the gas bubbles is improved by at least two mechanisms. Firstly, the pathway that gas bubbles have to travel through the reactor is longer, since the non-vertical arrangement of the membrane plates forces the bubbles in a trajectory that is longer than the vertical dimension of the section of the reactor that is provided with membrane plates. Another factor that increases the residence time is that the rising velocity of the bubbles decreases.

The means for introducing gas near the bottom of the membrane unit may be any device that is suitable for this purpose and known in the art, for instance, course bubble equipment like one or more nozzles, pipes provided with holes, sintered plates, fixed orifices, valve orifices and static tubes or fine bubble equipment like diffusers (discs, tubes, domes and plates), venturi and the like.

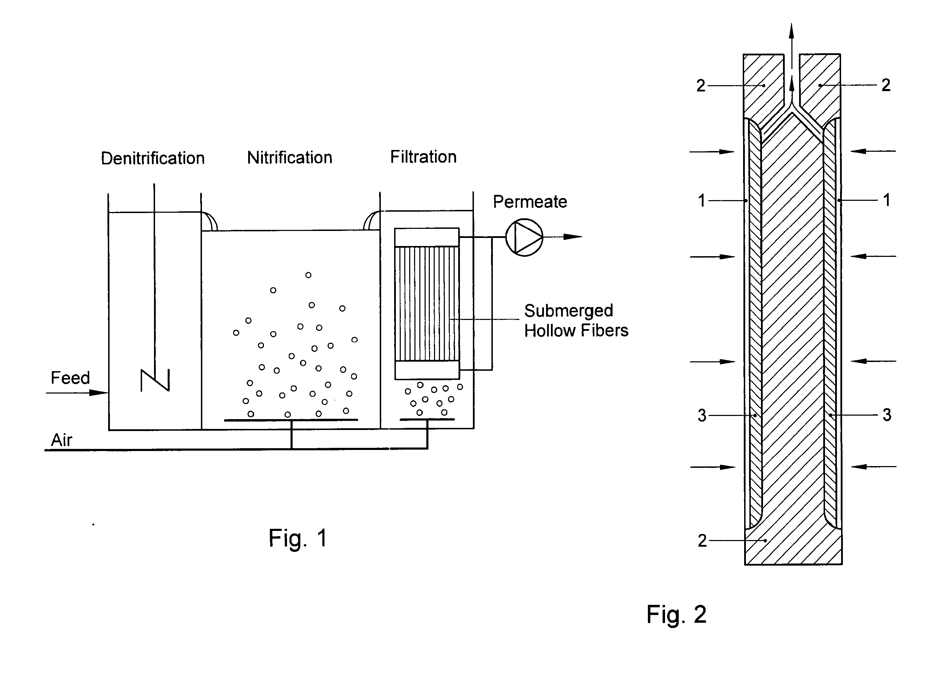

The present invention may be carried out using plate-like membrane modules. A typical example of such a module is schematically depicted in Fig. 2, showing a cross-sectional side view of the module comprising support (2) made from a suitable constructional material, such as (stainless) steel or plastic. On the support is present spacer (3), which is typically a non-woven material, although it may also be a woven material, such as a woven cloth. On top of spacer (3) there is provided the actual membrane material (1), which is present as a thin film, having a thickness of typically less than 1 mm, preferably from 0.1 to 0.5 mm. The shape of the support of the module, is chosen such that the liquid that passes through the membrane film (1), the flow of which is schematically indicated by the small horizontal arrows in Fig. 2, is collected in the space that holds the spacer (3) and the membrane film (1). Thus the collected liquids are allowed to flow in the upward direction of Fig. 2 and can be collected in a single channel in the top of the module, as indicated by the arrows in the top of module (2).

The liquids may have gas dissolved therein. After passing the membrane the liquid can be brought at a low pressure on the reverse side of the membrane and by result the gases may be at least partly liberated from the liquid.

Suitable membrane materials are *inter alia* membranes comprising one or more polymers, such as polyurethane, polypropylene, polyethersulphon, polytetrafluoroethylene (PTFE), optionally comprising negatively or positively charged groups. The membrane films may be woven or non-woven and may be provided with holes, for instance holes having a diameter ranging from 0.0007 to 0.001 micron for nanofiltration membranes and 0.001 to 0.1 for ultrafiltration membranes and 0.01 to 1 for microfiltration membranes. The thickness of each plate-like membrane unit is generally from about 0.2 to 10 cm, e.g. from 0.5 to 4 cm, such as about 1 cm. The membrane modules are vertically water (commonly activated sludge) immersed wherein due to pressure difference water is passing the membrane surface from the outside (activated sludge) to the inside (permeate side).

Typically two or more plate-like membrane units are placed in the reactor in accordance with the present invention. The number of units depends primarily on the size of the reactor, which is mainly dictated by the volume of the stream to be treated and the space available for placing the reactor. It was found that good results are obtained if the distance between the membrane units is kept at about 4 to 12 mm, preferably from about 5 to 8 mm, more preferably about 6 mm.

The plate-like membrane units having at least one surface that is positioned non-vertically may be one or more of such units each being essentially flat and placed under a certain angle in the reactor, which angle deviates more than 0° from an imaginary vertical plane in the reactor, which imaginary plane extends in the same horizontal direction as the membrane units. Preferably this angle is chosen between 30° to 60°.

In a more preferred embodiment, the plate-like membrane units are arranged in a "zigzag" fashion, as schematically depicted in Fig. 4 (right-hand side), which shows two corners (three zigzags). The number of corners may vary from zero (one single essentially flat unit comprising one or more membrane units) upwards to any suitable number, such as 3 - 10, or more. The optimal number of corners (zigzags) depends on various constructional considerations, in particular how the reactor volume is to be filled. If a high filling of the reactor volume is desired, then the number of corners should be high. As follows from the configuration in Fig. 4 (right-hand side), a relatively large volume is not filled by membrane units, which may be desirable under some circumstances.

The present invention is particularly useful for carrying out aerobic biological processes, in particular wastewater treatment processes.

### Examples

Two membrane configurations were compared. Each configuration had ten membrane plates. Each membrane plate was of the type depicted in Fig. 2. The membrane material used was PVC with an average pore size of 2 µm. The total membrane area for each configuration was 2052 cm².

The reference configuration (prior art), was of the type depicted in Fig. 4, left-hand; five columns of two membranes on top of each other were placed in the reactor at equal spacing of 6 mm.

In the configuration according to the invention, the ten membrane plates were placed in a zig zag configuration, similar as in Fig. 4, right-hand side). The distance of the modules was the same as for the reference configuration.

For both configurations, gas was fed at the bottom and was allowed to rise in between the membrane sheets. First nitrogen was fed. By flushing with nitrogen all oxygen was removed from the vessel. When all oxygen was removed, the nitrogen was shut off and instead air was dosed. The oxygen concentration in the liquid was followed in time by a dissolved oxygen (DO) probe. From the slope of the DO concentration as a function of time the oxygen transfer rate was calculated.

Different series of experiments were carried out at two different air flow rates and two different liquid viscosities of the liquids. The viscosity was varied to investigate the influence of viscosity on oxygen transfer rates, which is important when the process of the invention is applied for instance in sludge, which may be considerably more viscous than water. Tap water was used as the low viscosity liquid. The same water to which was added 4.5 g/dm³ carboxymethylcellulose was used as the high viscosity liquid.

The following results were obtained.

**Table 1: Experimental oxygen transfer rate k in h⁻¹**

| | Flow rate (measured at 1 atm and 20 °C) | | | |
|---|---|---|---|---|
| | 300 dm³ /min | | 600 dm³ /min | |
| Viscosity | Comparative | Inventive | Comparative | Inventive |
| Low | 3.8 | 6.4 | 10.2 | 11.5 |
| High | 3.8 | 5.4 | 5.3 | 9.9 |

The results clearly show an improvement in the oxygen transfer rate in the inventive zig zag configuration for all investigated situations.

## Claims

1. Membrane bioreactor (MBR) comprising a vessel and contained therein at least one plate-like membrane unit that has at least one surface that is positioned non-vertically and means for introducing gas at a location near the bottom of said membrane unit.

2. MBR according to claim 1, comprising two or more parallel oriented plate-like membrane units.

3. MBR according to any of the previous claims, wherein each of said plate-like membrane units comprises at least one part that is essentially the same in each of said membrane units and that is essentially flat and placed under an angle in said reactor, which angle is chosen between 30° to 60° relative to an imaginary vertical plane in the reactor, which imaginary plane extends in the same horizontal direction as the membrane units.

4. MBR according to claim 3, wherein each of said units comprises two or more of said parts, each of said part being connected under an angle with a similar part belonging to the same unit .

5. MBR according to any of the previous claims, wherein two or more of said plate-like membrane units are present having a mutual spacing of 4 to 12 mm, preferably from about 5 to 8 mm, more preferably about 6 mm.

6. Process for carrying out a chemical reaction involving micro-organisms, which is carried out in an apparatus according to any of the previous claims.
